# EUROPEAN PATENT SPECIFICATION

(11) **EP 2 116 463 B1**
(45) Date of publication and mention of the grant of the patent: **18.08.2010**
(21) Application number: 09006298.5
(22) Date of filing: 08.05.2009
(51) Int. Cl.: B62H 3/12

(54) **Parking device for bicycles**
Parkvorrichtung für Fahrräder
Dispositif de parking pour bicyclettes

(30) Priority: 08.05.2008 NL 1035402
(43) Date of publication of application: 11.11.2009
(73) Proprietor: Shelter Engineering B.V., 2331 BC Leiden (NL)
(72) Inventor: Hulscher, Alphonsus Johannes, 2331 RJ Leiden (NL)
(74) Representative: Griebling, Onno

(56) References cited:
- DE-A1- 10 306 596
- DE-U1- 9 012 517
- JP-A- 55 087 672
- RU-C1- 2 049 710
- US-A- 624 231
- US-A- 6 095 344
- US-A1- 2005 098 511
- US-B1- 6 302 278
- US-B1- 6 691 878

## Description

The invention relates to a parking device for bicycles comprising an elongated guide supported at a distance above the ground below a ceiling and guiding a first runner freely movable along the length of said guide which supports a suspending hook to be hooked around a part of a bicycle at a first position thereof.

Such a device is known as such from the German Gebrauchsmuster DE 90 12 517 U1, which is considered as the closest prior art. In this known device for parking bicycles the guide lies at a distance above the ground Which is only slightly greater than the height of a bicycle arid for parking a bicycle the single runner with its hook is positioned at the freely accessible end of the straight guide and is then hooked around the steering handles meanwhile pulling the bicycle upwardly somewhat to raise the front wheel thereof free from the ground. The bicycle is then pushed forwardly until it is completely below the ceiling.

An disadvantage of this device lies in the fact that the parked bicycles are always freely accessible and are thus in practice subject to hooliganism and theft.

The invention aims to obviate these drawbacks and to provide a parking device for bicycles of the kind as described above with a simple structure which is furthermore very insensitive for hooliganism because the parked bicycles are raised high above the ground.

This aim is according to the invention obtained in that this support is constituted by an elongated guide for two runners movable along this guide which each cany the second end of a pulling element, said guide comprising a first, essentially straight, end part which is pivotally supported at its first end at a distance above the ground around a horizontal pivot axis, continuing via an obtuse angle into a downwardly directed middle part which continues via an obtuse angle in an upwardly directed second end part, said guide being controllably rotatable around this pivot axis from a stable, low position, in which a bicycle can be suspended from the hooks hanging thereunder into a stable high position in which the hooks supporting the bicycle lie under the first end part of the guide.

As a result of the specific shape and the way in which the guide itself is supported the effect is obtained that in the lowest position thereof, in which the second end part is lowermost while both the runners, which can move freely along this guide, will be in this second end part the both respective suspending hooks can be hooked around the bicycle (the one around the steering handle and the other behind the saddle), after which the first end of this second end part can be lifted by the user to its stable high position. During this movement the runners will move along the middle part of the guide to me first end part thereat (if necessary aided by pushing the bicycle) and in this second position, which is a stable final position, the bicycle is suspended stable above the ground.

As all elements of the bicycle parking device lie at a relative great distance above the ground the parking device is very insensitive for hooliganism and theft.

When acting on the elongated guide to bring the same from a stable low position to a stable high position the user must exert some force on this guide. This force is lower in a very user-friendly embodiment of the invention which comprises an operating mechanism for swinging the guide from the low position thereof into the high position, and opposite, comprising a pulling element which is connected with its first end to the middle part of the guide and is anchored with its second end at a distance above this middle part and which is, starting from the connection thereof with the guide, firstly slung around a fixed guiding roller above this anchoring point, thereafter runs in the direction of the second end of the guide and is, above this second end of the elongated guide, slung around a second roller coupled to the first end of an operating lever which is rotatably supported at a distance below this fixed guide roller.

The use of the bicycle parking device is simplified when the operating lever is provided with a locking device for locking this lever in the respective end positions thereof.

The force which must be exerted by the user on the bicycle parking device is diminished still further by using a force accumulator which acts upon the first end of the operating lever in the direction of the second end of the guide. This can be for instance a counterweight but is preferably a gas spring.

Further preferred embodiments are described in the claims 6-8.

It is observed that DE 103 06 596 describes a device for parking bicycles which comprises an elongated guide for a single runner with a suspending hook to be hooked around the steering handle and having a very specific structure : this guide is made up from an number of successive hollow segments which each houses two halves of a leaf spring such that these springs have the tendancy to line up the segments into a straight line. When the hook is hooked around the steering handle and the free rear end of the guider is fixed to the frame of the bicycle near the rear wheel thereof and then released the segments, which are each under the influence of the successive springs, line up with each other in succession and the guide assumes a straight configuration.

This known device has thus a very complicated and costly structure and cannot raise the bicycle into an elevated position.

US 6 691 878 B1 describes a system for elevating and lowering a load, particularly a bicycle, comprising a complicated set-up of pivotally interconnected spring-loaded arms.

US 6 302 278 describes a bicycle display rack, also comprising a number of pivotally interconnected links co-operating with a cylinder and piston combination for raising and lowering a bicycle.

JP 55 087672 A shows a bicycle parking device in which bicycles can be parked at two different levels, one above the other, by means of a pivoting straight lifting lever.

US 2005/0098511 A1 describes a utility hook carrier, suitable for supporting a bicycle and destined for co-operation with a standard overhead garage door track.

A straight overhead bicycle rack with carrying hooks is shown in US 624231 while an overhead bicycle rack with provisions for folding a bicycle against the ceiling is subject of US 6 095 344.

Finally RU 2049710 C1 describes a complicated bicycle parking device with two parallel guides, each guiding a vertical lifting rod of which the respective ends are connected to a clamp which holds a bicycle, such that it can be brought from a horizontal position into a vertical storage position.

The invention will be elucidated on the hand of the drawing. In the drawing shows:
fig. 1 a schematical side view of a preferred embodiment of the invention;
fig. 2 a schematic side view of an auxiliary device used therein for pushing a bicyle to be parked forward.
fig. 3A-3F side views of the various stages of the movement of the components of the bicycle parking device.

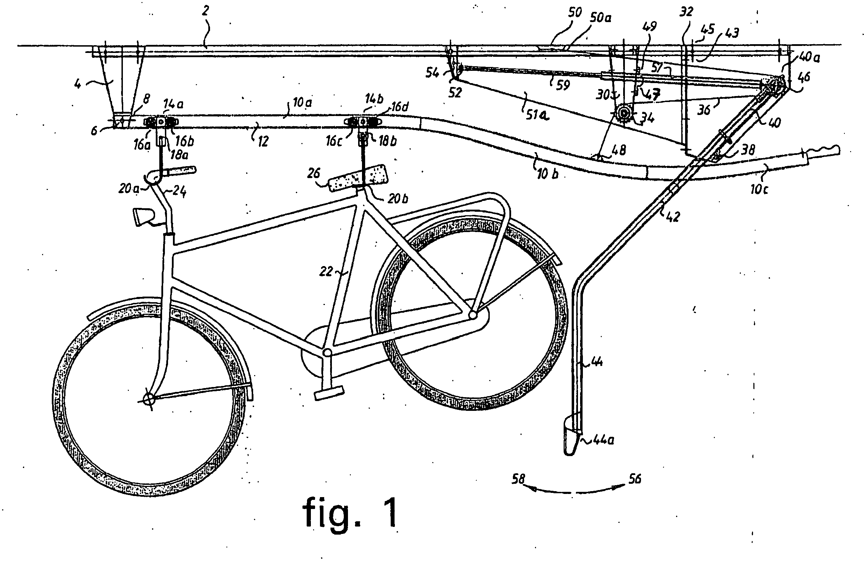

Fig. 1 shows a supporting profile 2, supported by a ceiling of a suitable structure, having a first downwardly directed carrying bracket 4 which supports in the pivot axis 6 the and 8 of a elongated guide which is indicated in its entirety with reference numeral 10. This guide consists of a U-profile which is open at its under side and of which both legs continue in oppositely directed end flanges 12.

This guide comprises, as the drawing shows, a first, essentially straight, end part 10a, which merges into a middle part 10b which runs, starting from the part 10a, downwardly, and thereafter finally a second end part 10c which runs upwardly again. Within this elongated guide there are two movable runners 14a, 14b each with two pairs of rollers 16a, 16b, 16c, 16d which bear upon the end flanges 12. Each runner has a downwardly directed lug 18a and 18b respectively which goes through the space present between the end edges of the flanges. 12 and which each support a suspending hook 20a and 20b respectively. These hooks are destined to be hooked aground a bicycle 22 which is to be parked and to this end the front hook 20a can be hooked around the steering handle 24 while the other .hook 20b can be hooked around the saddle 26 This way of hooking up a bicycle is known as such.

The above described parts are the essential components of the device according to the invention. To operate same in the way which is to be described later on the user can act directly on the end 100 of the guide 10 According to the invention, however, preferably one will use a lifting and lowering mechanism for this guide which is made up as follows

The ceiling or the celling structure 2 supports, near to the middle part 10b of the guide. 10 a second downwardly directed bracket 30 and, above the end part 10c, a third downwardly directed bracket 32. The second bracket 30 is provided near the lower end thereof with a guide roller or gear wheel 34 to cooperate with a supple pulling element 36, here shown to be a chain. The third bracket 32 supports in a pivot point (30) the endpart 40 of an operating lever 42 of which the second part 44 includes with the part 40 thereof an obtuse angle. A second gear wheel 46 is rotatingly supported at the upper end of the end part 40 and the chain 36 is guided around it. The chain 36 is thus with its first end 48 fixed to the middle part 10b near to the place where this middle part merges into the second end part 10c, then guided over the gear wheel 34, thereafter over the gear wheel 46 and then runs back to a fixing point 50 on the ceiling Structure 2. This fixing point 50 lies above the middle part 10b of the elongated guide 10. Between the second gear wheel 46 and the end 52 of a fourth bracket 54 which protrudes from the ceiling structure there is a linear force accumulator which acts between the guiding roller 46 and the end 52 and is here shown to be a gas spring 57, 59 of which the cylinder 57 is coupled to the guiding roller 46 and of which the piston rod 59 is coupled to the end 52 of the fourth bracket 54.

Swinging the end 44a of the operating lever part 44 in the direction of the arrow 56 has as a result that the gear wheel 46 moves to the left in the plane of drawing, so that the end 48 of the chain moves downwardly and the elongated guide 10 swings to the right around the pivot axis 6 so that the bicycle 22 moves downwardly and the gas spring 57, 59 is compressed; swinging the end 44a in the direction of the arrow 58 has as a result that the guiding roller 46 rotates to the right, and an upwardly directed force is exerted on the connection point of first end 48 on the middle part 10b of the guide so that the bicycle is lifted, this movement being supported by the action of the expanding gas spring. In this way the lifting-up of the bicycle is made easier.

The operating lever 42 is preferably provided with a locking mechanism to lock this lever in two positions. On the free end of the lever part 40 there is a spring loaded locking pin 40a which can cooperate with an opening 43 in a locking block 45 which is fixed to the profile 2 and with an opening 47 in a locking block 49 which is provided on the second bracket 30.

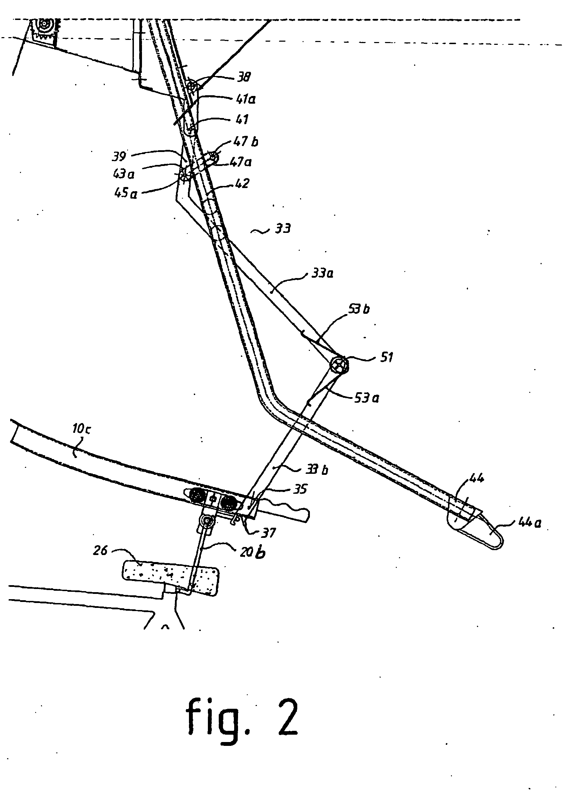

Figure 2 shows schematically an auxiliary device for aiding the initial movement of a bicycle along the guide 10. The principle of this device is known in itself and it is structured as follows it comprises a second lever 33 which is at its lower end 35 provided with a suitable gripper 37 ( shown schematically) which can grip around the second runner 14b. This second lever 33 has a cranked endpart 39 and two straight parts 33a,33b pivotally interconnected at 51 and co-operating with a hairpinspring with the legs 53a,53b. This hairpinspring tries to keep the parts 33a,33b aligned. The endpart 39 is pivotally supported at the pivot point 41 by the bracket 41a which depends from the bracket 32 and this pivot point lies dose below the pivot point 38 of the lever 42. The levers 42 and 39 are intercoupled by a short coupling lever 43a which pivotally coupled with the leverpart 39 at the pivot point 45a and is pivotally coupled with the lever 42 at the pivot point 47b which is present at the end of the bracket 47a, carried by the lever 42. The set-up is such that, when the lever 42 rotates around the pivot point 38 over a certain angle a the endpart 39 of the lever 33 rotates around its pivot point 41 over the angle slightly smaller than 2*a* . More precisely in the shown embodiment a rotation of 90 degrees of the lever 42 brings about a rotation of 160 degrees of the lever 33. In this way the swinging of the end 44 of the lever 42 in the direction of the arrow 58 has as a result that the endpart 35 first pushes the runner 14b upwardly during the rotation of the lever 42 over 45 degrees, and, when this movement is completed over again 45 degrees, the runner is pushed upwardly and to the left. This has two advantages : the bicycle will not contact other bicycles in its vicinity and there is no need to act upon the bicycle manually.

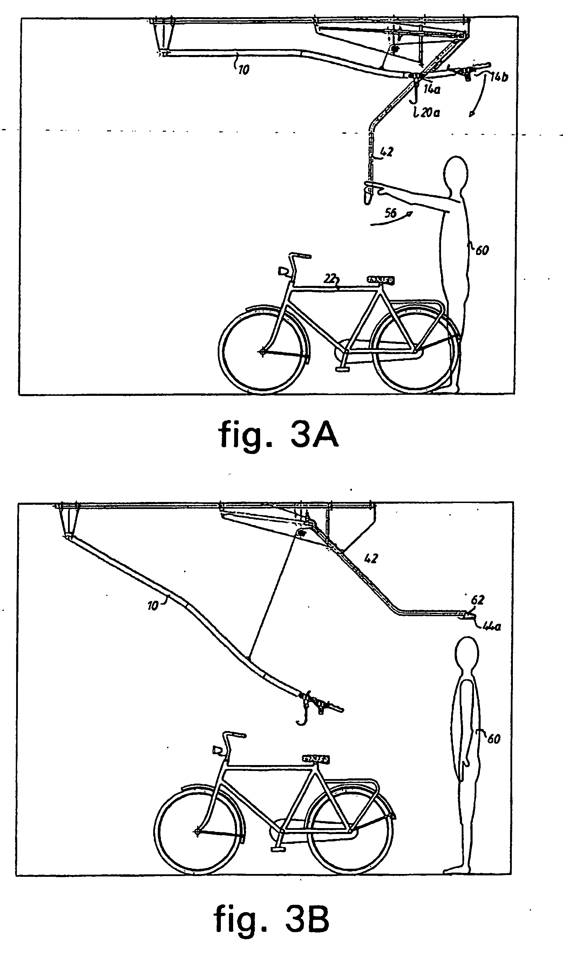

The several operating positions of the bicycle parking device according ta the invention and the various stages of the movement thereof will be elucidated on the basis of the figures 3A-3F. In these figures only the element\s which are necessary to understand the operation of the device are shown.

These drawings also show how the mechanism as described above is in practice covered by a cover 51a.

Note that the auxiliary device as bescribed above and shown in Fig 2 is not shown in these figures.

The starting position is shown in fig. 3A; the operating lever 42 is in its final position to the left, the gas spring 57, 59 is completely extended, the guide 10 is in its uppermost position and both the runners 14a, 14b lie at the end of the second end part 10c of the guide 10; they can be intercoinnected in this position by means of the hook 20b.

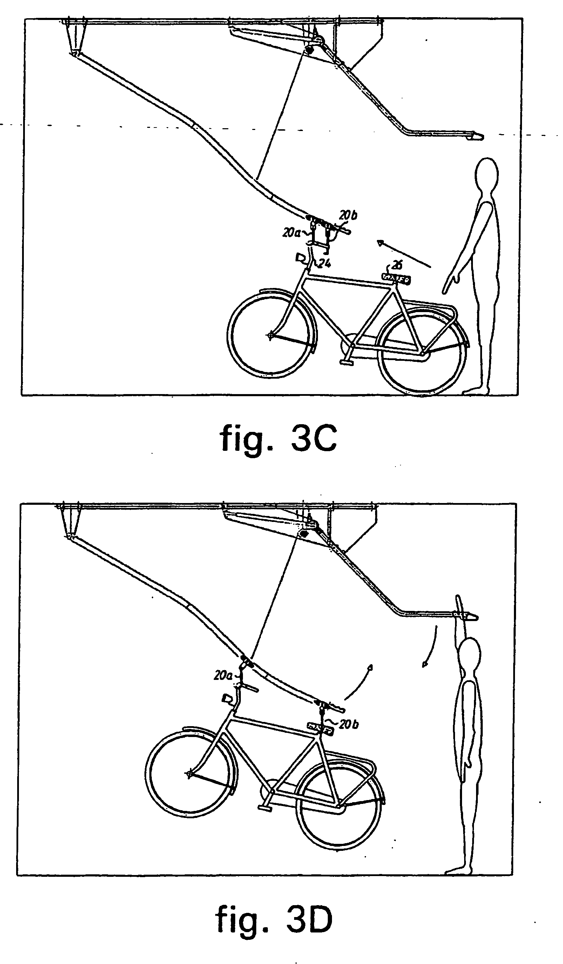

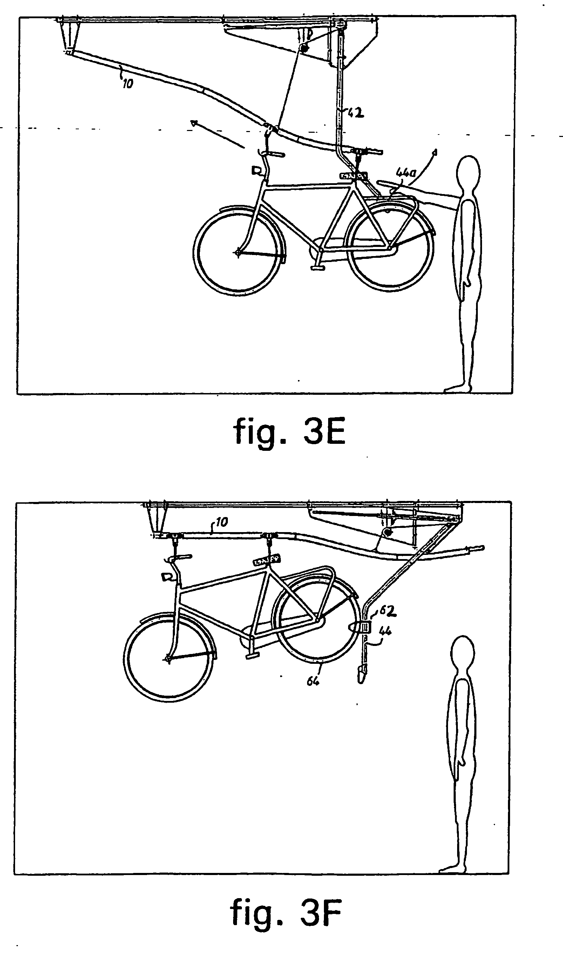

Starting from this situation the user 60 grips the operating lever 42 at the end 44a thereof and rotates it in the direction of the arrow 56 (fig. 3A), thus to the left and upwardly, until the situation as shown in fig. 3B is reached. The gas spring is now compressed and the operating lever 42 is locked in the locking opening 47. The user now hooks, as fig. 3C shows, firstly the hook 20a to the steering handle 24 and thereafter the hook 20b behind the saddle 26 - meaning that he must lift the bicycle somewhat- until the situation of fig 3D is reached. Then the user presses the operating lever 42 until it is in the position shown in fig. 3E in which the locking pin (40a) is locked in the locking opening 43; the bicycle is now nearly horizontal. Pushing the end 44a further to the left results in a lifting of the guide 10, supported by the gas spring, into the second stable end position, and during this movement the runners 14a, 14b with the bicycle hanging thereon move from right to left in the drawing ( possibly aided by a further pushing force exerted by the auxiliary device) until they assume the second stable end position shown in fig. 3F. In this position the user can, if necessary, provide a ring or cable lock 62 around the rear wheel 64 of this bicycle and the operating lever part 44.

## Claims

1. Parking device for bicycles comprising an elongated guide (10), supported at a distance above the ground arid guiding a first runner (14a) freely movable along the length of said guide (10) and which first tunner (14a) supports a first suspending hook (20a) to be hooked around a first part (24) of a bicycle (22) to be parked, at a first position thereof **characterised in that said** guide (10) supports a second such runner (14b), bearing a second suspending hook (20b) to be hooked around a second part (26) of the bicycle (22) at a distance from the first part (24), while the guide (10) comprises a first, essentially straight, end part (10a) which is pivotally supported at its first end at a distance above the ground around a horizontal pivot axis (6), continuing via an obtuse angle into a downwardly directed middle part (10b) which continues via an obtuse angle in an upwardly directed second end part (10c), said guide (10) being controllably rotatable around this pivot axis (6) from a stable, low position, in which a bicycle (22) can be suspended from the hooks (20a, 20b) hanging thereunder into a stable high position in which the hooks (20a, 20b) supporting the bicycle (22) lie under the first end part (10a) of the guide (10).

2. Device according to claim 1, including an operating mechanism for swinging the guide (10) from the low position thereof into the high position, and opposite, comprising a pulling element (36) which is connected with its first end (48) to a first fixing point on the middle part (10b) of the guide (10) and is fixed with its second end (50a) to a second fixing point (50) on a ceiling structure (2) at a distance above this middle part (10b) and which is, starting from its first fixing point on the middle part (10b) of the guide (10) firstly slung around a fixed guiding roller (34) above this first fixing point, thereafter runs in the direction of the second end of the guide (10) as seen in the high position thereof, and is, above this second end of the elongated guide (10), slung around a second roller (46) coupled to the first end of an operating lever (42) which is rotatably supported in a first pivot point (38) at a distance below this fixed guiding roller (34).

3. Device according to claim 2, wherein the operating lever (42) is provided with a locking mechanism (40a, 43, 47) to lock this operating lever (42) in respective end positions thereof.

4. Device according to claims 2 or 3, comprising a force accumulator (57, 59) which acts upon the first end of the operating lever (42) in the direction of the second end of the guide (10) as seen in the high position thereof.

5. Device according to claim 4, wherein this force accumulator (57, 59) is a gas spring.

6. Device according to any of the claims 2 to 4, comprising an elongated pushing lever (33) pivotally supported at its first, cranked, end (39) in a second pivot point (41) which lies near to the first pivot point (38) of the operating lever (42), and which pushing lever (22) is pivotally coupled through a short coupling lever (47a) to a coupling point (47b) on the operating lever (42), and can act with its second end (35) upon the second runner (14b).

7. Device according to any of the claims 1 to 6, **characterised in that** the guide (10) comprises a downwardly open U-profile of which the legs continue in oppositely directed end flanges on which the runners (14a, 14b) bear.

8. Device according to claim 7, **characterised in that** the runners (14a, 14b) each comprise a set of rollers (16a, 16b, 16c, 16d).

## Patentansprüche

1. Parkvorrichtung für Fahrräder mit einer länglichen Führung (10), die in einem Abstand über dem Boden gehalten ist und einen ersten Läufer (14a) frei beweglich entlang der Länge der Führung (10) führt, welcher erste Läufer (14a) einen ersten Aufhängehaken (20a) trägt, in den ein erster Teil (24) eines zu parkenden Fahrrads (22) in einer ersten Position desselben einzuhängen ist, **dadurch gekennzeichnet, dass** die Führung (10) einen zweiten derartigen Läufer (14b) trägt, welcher einen zweiten Aufhängehaken (20b) trägt, in den ein zweiter Teil (26) des Fahrrads (22) in einem Abstand vom ersten Teil (24) einzuhängen ist, wobei die Führung (10) einen ersten, im Wesentlichen geraden Endteil (10a) aufweist, der an seinem freien Ende in einem Abstand über dem Boden schwenkbar um eine horizontale Schwenkachse (6) gehalten ist und sich über einen stumpfen Winkel in einem nach unten gerichteten Mittelteil (10b) fortsetzt, welcher sich über einen stumpfen Winkel in einem nach oben gerichteten, zweiten Endteil (10c) fortsetzt, wobei die Führung (10) um diese Schwenkachse (6) aus einer stabilen niedrigen Position, in welcher ein Fahrrad (22) in den Haken (20a, 20b) eingehängt werden kann und unter diesen hängt, in eine stabile hohe Position, in welcher die das Fahrrad (22) tragenden Haken (20a, 20b) unter dem ersten Endteil (10a) der Führung (10) liegen, kontrolliert verdreht werden kann.

2. Vorrichtung nach Anspruch 1 mit einem Betätigungsmechanismus zum Verschwenken der Führung (10) aus ihrer niedrigen Position in die hohe Position und umgekehrt, welcher ein Zugelement (36) aufweist, das mit seinem ersten Ende (48) an einer ersten Befestigungsstelle am Mittelteil (10b) der Führung (10) angebracht und mit seinem zweiten Ende (50a) an einer zweiten Befestigungsstelle (50) an einer Deckenkonstruktion (2) in einem Abstand über dem Mittelteil (10b) befestigt ist, und welches, beginnend von seiner ersten Befestigungsstelle am Mittelteil (10b) der Führung (10), zuerst um eine fixe Führungsrolle (34) oberhalb der ersten Befestigungsstelle geschlungen ist, dann in Richtung des zweiten Endes der Führung (10) läuft, wie in der hohen Position derselben zu sehen ist, und über dem zweiten Ende der länglichen Führung (10) um eine zweite Rolle (46) geschlungen ist, die mit dem ersten Ende eines Betätigungshebels (42) gekuppelt ist, welcher in einem ersten Schwenkpunkt (38) in einem Abstand unterhalb der fixen Führungsrolle (34) drehbar gehalten ist.

3. Vorrichtung nach Anspruch 2, wobei der Betätigungshebel (42) mit einem Verriegelungsmechanismus (40a, 43, 47) zur Verriegelung dieses Betätigungshebels (42) in jeweiligen Endpositionen desselben versehen ist.

4. Vorrichtung nach Anspruch 2 oder 3 mit einem Kraftspeicher (57, 59), der auf das erste Ende des Betätigungshebels (42) in Richtung des zweiten Endes der Führung (10) wirkt, gesehen in der hohen Position derselben.

5. Vorrichtung nach Anspruch 4, wobei der Kraftspeicher (57, 59) eine Gasfeder ist.

6. Vorrichtung nach einem der Ansprüche 2 bis 4, mit einem länglichen Schubhebel (33), der an seinem ersten, gekröpften Ende (39) schwenkbar gehalten ist, in einem zweiten Schwenkpunkt (41) welcher nahe dem ersten Schwenkpunkt (38) des Betätigungshebels (42) liegt, und welcher Schubhebel (33) über einen kurzen Kupplungshebel (47a) schwenkbar mit einem Kupplungspunkt (47b) am Betätigungshebel (42) gekuppelt ist und mit dem zweiten Ende (35) auf den zweiten Läufer (14b) wirken kann.

7. Vorrichtung nach einem der Ansprüche 1 bis 6, **dadurch gekennzeichnet, dass** die Führung (10) ein nach unten offenen U-Profil aufweist, dessen Schenkel sich in entgegengesetzt gerichteten Endflanschen fortsetzen, auf welchen die Läufer (14a, 14b) gelagert sind.

8. Vorrichtung nach Anspruch 7, **dadurch gekennzeichnet, dass** die Läufer (14a, 14b) jeweils eine Gruppe von Rollen (16a, 16b, 16c, 16d) aufweisen.

## Revendications

1. Dispositif de parcage pour bicyclettes, comprenant un guide allongé (10), supporté à une certaine distance au-dessus du sol et guidant un premier curseur (14a) mobile librement le long dudit guide (10), lequel premier curseur (14a) supportant un premier crochet de suspension (20a) destiné à être accroché autour d'une première pièce (24) d'une bicyclette (22) à parquer, dans une première position de celle-ci, **caractérisé en ce que** ledit guide (10) supporte un second curseur (14b), portant un second crochet de suspension (20b) destiné à être accroché autour d'une seconde pièce (20b) de la bicyclette (22), à une certaine distance de la première pièce (24), tandis que le guide (10) comprend une première pièce d'extrémité, sensiblement rectiligne (10a) qui est supportée à pivotement à sa première extrémité à une certaine distance au-dessus du sol autour d'un axe de pivotement horizontal (6), se poursuivant via un angle obtus par une pièce médiane (10b) orientée vers le bas, laquelle se poursuit via un angle obtus par une seconde pièce d'extrémité (10c) orientée vers le haut, ledit guide (10) pouvant tourner d'une manière commandée autour de cet axe de pivotement (6) depuis une position basse, stable, dans laquelle une bicyclette (22) peut être suspendue au crochets (20a, 20b) en pendant sous ceux-ci, jusque dans une position haute stable, dans laquelle les crochets (20a, 20b) supportant la bicyclette (22) se trouvent sous la première pièce d'extrémité (10a) du guide (10).

2. Dispositif selon la revendication 1, comprenant un mécanisme d'actionnement pour faire basculer le guide (10) de la position basse de celui-ci à la position haute, et inversement, comportant un élément de traction (36) qui est relié par sa première extrémité (48) à un premier point de fixation sur la partie médiane (10b) du guide (10) et est fixé par sa seconde extrémité (50a) à un second point de fixation (50) sur une structure plafonnière (2) à une certaine distance au-dessus de cette partie médiane (10b) et qui est, à partir de son premier point de fixation sur la pièce médiane (10b) du guide (10), tout d'abord passé autour d'un galet de guidage fixe (34) au-dessus de ce premier point de fixation, puis va en direction de la seconde extrémité du guide (10) vue dans la position haute de celui-ci, et est, au-dessus de cette seconde extrémité du guide allongé (10), passé autour un second galet (46) monté à la seconde extrémité d'un levier de manoeuvre (42) qui est supporté à rotation, en un premier point de pivotement (38), à une certaine distance sous ce galet de guidage fixe (34).

3. Dispositif selon la revendication 2, dans lequel le levier de manoeuvre (42) est pourvu d'un mécanisme de verrouillage (40a, 43, 47) pour verrouiller ce levier de manoeuvre (42) dans des positions de fin de course respectives de celui-ci.

4. Dispositif selon la revendication 2 ou 3, comprenant un accumulateur (57, 59) de force qui agit sur la première extrémité du levier de manoeuvre (42) dans la direction de la seconde extrémité du guide (10) vue dans la position haute de celui-ci.

5. Dispositif selon la revendication 4, dans lequel cet accumulateur (57, 59) de force est un ressort à gaz.

6. Dispositif selon l'une quelconque des revendications 2 à 4, comprenant un levier de poussée allongé (33) supporté à pivotement à sa première extrémité, coudée, (39), en un second point de pivotement (41) qui se trouve près du premier point de pivotement (38) du levier de manoeuvre (42), et lequel levier de poussée (33) est accouplé d'une manière pivotante par un court levier d'accouplement (47a) à un point d'accouplement (47b) sur le levier de manoeuvre (42), et peut agir par sa seconde extrémité (35) sur le second curseur (14b).

7. Dispositif selon l'une quelconque des revendications 1 à 6, **caractérisé en ce que** le guide (10) comporte un profilé en U, ouvert vers le bas, dont les branches se poursuivent par des ailes d'extrémités à orientations opposées, sur lesquelles portent les curseurs (14a, 14b).

8. Dispositif selon la revendication 7, **caractérisé en ce que** les curseurs (14a, 14b) comportent chacun un jeu de galets (16a, 16b, 16c, 16d).
